# NEUE EUROPÄISCHE PATENTSCHRIFT

(11) **EP 1 584 225 B2**
(45) Veröffentlichungstag und Bekanntmachung des Hinweises auf die Entscheidung über den Einspruch: **08.12.2010**
(45) Hinweis auf die Patenterteilung: 02.05.2007
(21) Anmeldenummer: 05007082.0
(22) Anmeldetag: 31.03.2005
(51) Int. Cl.: A01F 12/38

(54) **Mähdrescher**
Combine
Moisonneuse-batteuse

(30) Priorität: 06.04.2004 DE 102004017347
(43) Veröffentlichungstag der Anmeldung: 12.10.2005
(73) Patentinhaber: CLAAS Selbstfahrende Erntemaschinen GmbH, 33428 Harsewinkel (DE)
(72) Erfinder: Speckamp, Dirk, 59073 Hamm (DE); Dammann, Martin, 33428 Harsewinkel (DE); Bernhardt, Gerd, Prof. Dr., 01728 Bannewitz/OT-Hänichen (DE); Hübner, Ralf, Dr., 01097 Dresden (DE)

(56) Entgegenhaltungen:
- EP-A- 0 451 358
- DE-A- 2 753 505
- DE-A- 19 506 059
- DE-A- 19 649 020
- DE-B- 1 167 090
- DE-C- 19 908 696
- GB-A- 177 359
- US-A- 6 119 442
- M. GUBSCH: 'Der Einfluss der Längsneigung des Mähdreschers auf das Abscheidungs- und Förderverhalten des Strohschüttlers' 17 Februar 1969, BERLIN, Seiten 127 - 139
- JOHN DEERE BRASIL: 'Technical Manual Combines 1450, 1450 CWS, 1550 and 1550 CWS' 10 Mai 2002,

## Beschreibung

Die Erfindung betrifft ein Verfahren und eine Vorrichtung zum Betreiben eines Mähdreschers nach dem Oberbegriff der Ansprüche 1 und 15.

Ein den Mähdrescher durchlaufender Erntegutstrom wird in diesem durch verschiedene Arbeitsorgane in der Weise bearbeitet, dass zunächst in Dreschorganen die Fruchtstände aus den Erntegutstängeln herausgelöst werden. Dabei wird der Erntegutstrom in verschiedene Teilströme aufgeteilt, die entweder unmittelbar in Reinigungsorgane geleitet oder zunächst als Hordenschüttler ausgeführten Trenneinrichtungen zugeführt werden. Während eine Trenneinrichtung Restkörner aus einer im Wesentlichen aus Stroh bestehenden Erntegutmatte herauslöst, wird in der Reinigungseinrichtung der im Wesentlichen aus Körnern und Beimengungen bestehende Gutstrom von den Beimengungen befreit. Sowohl in der Trenneinrichtung als auch in der Reinigungseinrichtung wird durch fremderregte Arbeitsorgane eine Entmischung der verschiedenen Bestandteile des jeweiligen Erntegutstromes bewirkt.

Insbesondere auf Hordenschüttlern führt die stets gleiche Erregung, des über den Hordenschüttler bewegten Gutstromes, zu dessen allmählicher Verdichtung, sodass die Intensität der Kornabscheidung mit zunehmender Schüttlerlänge erheblich abnimmt. Zugleich führt diese Art der Erregung dazu, dass innerhalb der Gutschicht eine Entmischung in der Weise erfolgt, dass sich kurzhalmige Gutschichtbestandteile sowie Spreu in den unteren Zonen der Gutschicht konzentrieren, was ebenfalls einer effektiven Kornabscheidung entgegenwirkt. Zudem wird die Kornabscheidung ganz maßgeblich vom Gutdurchsatz und der Erntegutbeschaffenheit beeinflusst, wobei vor allem hohe Gutdurchsätze zu einer erheblichen Verschlechterung der Kornabscheidung auf dem Hordenschüttler führen können.

Gemäß der EP 0 451 358 ist es bekannt, die einzelnen Horden eines Hordenschüttlers so in eine umlaufende Bewegung zu versetzen, dass sich die Horden auf elliptischen Bahnen bewegen, wobei die Ausrichtung der Ellipsenbahn durch Koppelmechanismen veränderbar ist sodass das Abscheideverhalten des Hordenschüttlers an unterschiedliche Erntegutarten und Erntebedingungen angepasst werden kann. Aufgrund der innerhalb einer vorgewählten Einstellung des Koppelmechanismus immer gleichen Erregung der über den Hordenschüttler bewegten Gutschicht haftet einer solchen Ausführung der bereits geschilderte Nachteil an, dass sich die Gutschicht allmählich verdichtet, was letztlich zu einer Verschlechterung der Kornabscheidung führt.

Zudem ist es bekannt, Hordenschüttler obenseitig mit sogenannten, in der Regel umlaufenden Schüttlerhilfen zu versehen, die eine Auflockerung des Erntegutes bewirken. Tendenziell in die gleiche Richtung weisen Systeme, bei denen entweder die Durchtrittsflächen der Schüttlerhorden schwingend angetrieben oder luftdurchströmt ausgeführt sind, um eine Auflockerung der Gutschicht zu erreichen. Oszillierende Schwingbewegungen und Luftdurchströmung zur Entmischung von Gütern einzusetzen, ist auch im Bereich der Reinigungseinrichtungen weit verbreitet. Derartige Systeme haben aber den Nachteil, dass sie auf Durchsatzschwankungen sehr empfindlich reagieren, wobei mit zunehmendem Durchsatz eine erhebliche Verschlechterung der Abscheideeffektivität eintritt.

Es ist deshalb Aufgabe der Erfindung ein Verfahren und eine Vorrichtung für die Entmischung von Erntegütern vorzuschlagen, die die beschriebenen Nachteile des Standes der Technik vermeiden.

Diese Aufgabe wird erfindungsgemäß durch die kennzeichnenden Merkmale der Ansprüche 1 und 15 gelöst.

Indem die Erregung der Gutschicht auf dem Hordenschüttler in Abhängigkeit von einem oder mehreren Parametern des Erntegutes änderbar ist, wird sichergestellt, dass die Erregung der Gutschicht in der Weise beeinflussbar ist, dass sich stets optimale Entmischungs- und Abscheidebedingungen für die noch in der Gutschicht enthaltenen sogenannten Restkörner ergeben.

Im einfachsten Fall können die Parameter des Erntegutes die Erntegutart, der Erntegutdurchsatz, die Feuchte des Erntegutes, die Erntegutgeschwindigkeit sowie die Struktur des Erntegutes sein. Indem einer oder mehrere dieser Parameter bei der Einstellung der Erregerschwingung auf dem Hordenschüttler berücksichtigt werden, kann sehr präzise Einfluss auf sich ändernde Ernteguteigenschaften und damit verbunden, sich ändernde Abscheidebedingungen für die Restkörner genommen werden.

Eine besonders vorteilhafte Ausgestaltung des erfindungsgemäßen Verfahrens ergibt sich dann, wenn die Erregung der Gutschicht auf dem Hordenschüttler an die Eigenfrequenz der erregten Gutschicht anpassbar ist, sodass sicher vermieden wird, dass die Erregerschwingung der eigenfrequenzbedingten Schwingung der Gutschicht entspricht, da dies stets zu einer Verschlechterung der Restkornabscheidung führt.

Die Erregung der Gutschicht auf dem Hordenschüttler kann auch dadurch zu einer weiter verbesserten Kornabscheidung führen, dass die Erregung in Abhängigkeit von dem Verlauf der Kornabscheidung auf dem Hordenschüttler änderbar ist. Auf diese Weise kann unmittelbar auf eine sich verschlechternde Restkornabscheidung auf dem Hordenschüttler reagiert werden.

Indem als Parameter des Erntegutes die Fördergeschwindigkeit gewählt wird und die Fördergeschwindigkeit des Erntegutes auf dem Hordenschüttler in Abhängigkeit von dem über den Hordenschüttler bewegten Erntegutdurchsatz einstellbar ist, wird sichergestellt, dass jeweils die für niedrige Kornverluste und eine damit korrespondierende effiziente Entmischung erforderliche optimale Gutgeschwindigkeit des Erntegutes auf dem Hordenschüttler erreicht wird.

In vorteilhafter Weiterbildung des erfindungsgemäßen Verfahrens kann der Erntegutdurchsatz entweder unmittelbar auf dem Hordenschüttler selbst oder an beliebiger Stelle im Mähdrescher ermittelt werden, sofern das generierte Durchsatzsignal proportional zum Erntegutdurchsatz auf dem Hordenschüttler ist. Indem das Durchsatzsignal bereits vor dem Auftreffen des Erntegutes auf dem Hordenschüttler generiert wird, kann zudem sichergestellt werden, dass mit dem Auftreffen des entsprechenden Erntegutes auf dem Hordenschüttler sofort auf dessen Erregung Einfluss genommen werden kann.

Eine besonders einfache Form der Einflussnahme auf die Geschwindigkeit des Erntegutes auf dem Hordenschüttler ergibt sich dann, wenn ein oder mehrere Betriebsparameter des Hordenschüttlers geändert werden sodass die Intensität der Gutmitnahme auf dem Hordenschüttler entweder zu- oder abnimmt. Im einfachsten Fall können diese Betriebsparameter des Hordenschüttlers von der Hordenschüttlerdrehzahl, der Amplitude der Gutschichterregung oder der sich in Abhängigkeit von der Bewegung der Schüttlerhorden ergebenden Schwingbewegung des Hordenschüttlers gebildet werden, da insbesondere diese Parameter maßgeblichen Einfluss auf die Intensität der Gutmitnahme auf dem Hordenschüttler haben.

Eine konstruktiv einfache Umsetzung des Verfahrens ergibt sich dann, wenn dem Mähdrescher zur Sensierung des Durchsatzes im Mähdrescher und der Gutgeschwindigkeit auf dem Hordenschüttler ein oder mehrere an sich bekannte Sensoren zugeordnet sind, die dem Durchsatz der jeweiligen Teilströme proportionale Durchsatzsignale und der Gutgeschwindigkeit auf dem Hordenschüttler proportionale Gutgeschwindigkeitssignale generieren, die dann in einer Steuer- und Auswerteinheit zu Istwerten des Erntegutdurchsatzes und der Gutgeschwindigkeit auf dem Hordenschüttler verrechnet werden, sodass zunächst auf einfache Weise die Basisdaten für das erfindungsgemäße Verfahren bestimmbar sind.

Aufgrund dessen, dass das Abscheideergebnis neben dem Durchsatz und der Gutgeschwindigkeit von einer Vielzahl von Parametern beeinflusst wird, sind in der Steuer- und Auswerteinheit erntegutart- und erntegutdurchsatzabhängige Gutgeschwindigkeits-Kennlinien hinterlegt, aus denen für die ermittelten Erntegutdurchsätze optimale Gutgeschwindigkeiten auf dem Hordenschüttler ermittelbar sind.

Eine besonders zielführende Ausgestaltung des erfindungsgemäßen Verfahrens wird dann erreicht, wenn zumindest ein Optimierungskriterium niedrige Kornverluste sind, da dies regelmäßig das den Betreiber des Mähdreschers vordergründig interessierende Optimierungskriterium darstellt.

Da die Zusammenhänge zwischen der Gutgeschwindigkeit, den Ernteguteigenschaften und den Betriebsparametern des Hordenschüttlers sehr komplex sind, ermittelt die Steuer- und Auswerteinheit unmittelbar neben der optimierten, auf den jeweiligen Erntegutdurchsatz abgestimmten Gutgeschwindigkeit, zugleich die optimierten Betriebsparameter, wobei dies neben der Entscheidung, welche Betriebsparameter zu optimieren sind, zugleich den konkreten Einstellwert für den jeweiligen Betriebsparameter betrifft.

Damit der Betreiber über die ablaufenden Optimierungsvorgänge unterrichtet ist und gegebenenfalls in den Optimierungsprozess eingreifen kann, ist das erfindungsgemäße Verfahren so ausgebildet, dass einerseits die ermittelten optimierten Betriebsparameter unmittelbar an den jeweiligen Arbeitsorganen eingestellt werden und/oder dem Betreiber zur Anzeige gebracht werden.

Eine weitere Verbesserung der Entmischungsvorgänge auf dem Hordenschüttler wird dann erreicht, wenn die Hangneigung des Mähdreschers in die zu ermittelnde Erregung der Gutschicht einfließt.

Indem der Hordenschüttlerantrieb relativ zum Maschinenrahmen des Mähdreschers bewegbar ist, wird zudem sichergestellt, dass einerseits die Entmischung auf dem Hordenschüttler effektivierbar ist und zudem auf einfache Weise Einfluss auf die Erregung der Gutschicht genommen werden kann.

Auf konstruktiv einfache Weise wird die Relativbewegung des Hordenschüttlerantriebs zum Maschinenrahmen des Mähdreschers dadurch erreicht, dass der Hordenschüttlerantrieb von einem Zwischenrahmen aufgenommen wird und dieser Zwischenrahmen relativ zum Maschinenrahmen bewegbar ist. Dies ermöglicht, dass der primäre Hordenschüttlerantrieb nahezu unverändert in das neue System integriert werden kann.

Ein konstruktiv einfach ausgeführter und damit kostengünstiger Antrieb des Zwischenrahmens wird dann gewährleistet, wenn der Antrieb des Zwischenrahmens als an sich bekannter Kurbelantrieb ausgeführt ist. Ein besonders intensiver Einfluss auf die Entmischung auf dem Hordenschüttler bewirkt dieser zusätzliche Kurbelantrieb dann, wenn er so dimensioniert ist, dass er dem Hordenschüttler eine zusätzliche Schwingbewegung aufprägt.

Um eine hohe Flexibilität in der Änderung der Schwingbewegung des Hordenschüttlers zu erreichen, können der Hordenschüttlerantrieb und der Kurbelantrieb des Zwischenrahmens so dimensioniert sein, dass sie entweder synchron oder asynchron umlaufen. Ebenfalls eine hohe Flexibilität wird erreicht, wenn das Drehzahlverhältnis zwischen dem Hordenschüttlerantrieb und dem Kurbelantrieb des Zwischenrahmens änderbar ist.

Eine erhebliche Einsparung an Antriebsbaugruppen wird dann erreicht, wenn der Antrieb dieses Zwischenrahmens an den ohnehin im Mähdrescher vorhandenen Antrieb des Rücklaufbodens gekoppelt wird.

Zudem kann der Regelmechanismus der Steuer- und Auswerteinheit so gestaltet sein, dass die Drehzahl des Hordenschüttlerantriebs und die Drehzahl des den Zwischenrahmen antreibenden Kurbeltriebs sowohl aufeinander als auch auf die Kröpfung der Kurbelwellen abgestimmt ist sodass Resonanzen und damit verbundenes Aufschwingen des Gesamtsystems vermieden werden.

Die Flexibilität der Gutschichterregung wird auch dadurch weiter erhöht, wenn jede Schüttlerhorde separat durch einen Hordenschüttlerantrieb und einem diesen zugeordneten weiteren Kurbelantrieb erregt wird.

Weitere vorteilhafte Ausführungen sind Gegenstand weiterer Unteransprüche und werden nachfolgend an Hand eines in mehreren Figuren dargestellten Ausführungsbeispiels beschrieben. Es zeigen:
- Fig. 1: Seitenansicht eines Mähdreschers mit Schüttlerantrieb
- Fig. 2: Detailansicht des Schüttlerantriebs in einer ersten Ausführungsform
- Fig. 3: Detailansicht des Schüttlerantriebs in einer weiteren Ausführungsform
- Fig. 4: eine schematische Darstellung der Steuerung des Schüttlerantriebs in Seitenansicht

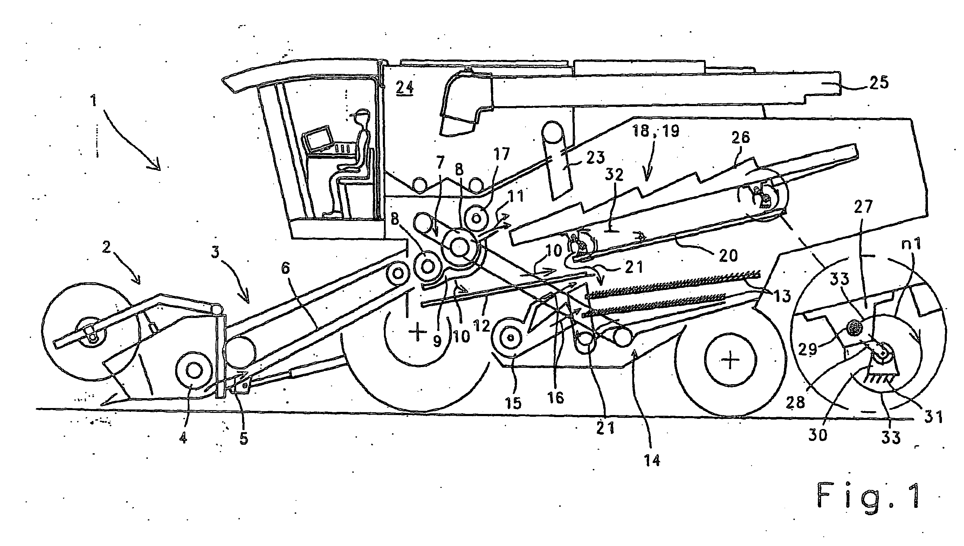

Der in Fig. 1 schematisch dargestellte Mähdrescher 1 nimmt in seinem frontseitigen Bereich ein Getreideschneidwerk 2 auf, welches in an sich bekannter Weise mit dem Schrägförderer 3 des Mähdreschers 1 verbunden ist. Das Querförderorgan 4 des Schneidwerkes 2 übergibt das Erntegut 5 an den Schrägförderer 3, wobei dieser das Erntegut 5 mittels umlaufendem Förderer 6 in seinem obenseitigen rückwärtigen Bereich an die Dreschorgane 7 des Mähdreschers 1 übergibt. In dem ein- oder mehrtrommelig ausgeführten Dreschwerk 7 wird das Erntegut 5 zwischen den Dreschtrommeln 8 und einem diese wenigstens teilweise ummantelnden Dreschkorb 9 hindurchgeführt und in zumindest zwei Teilströme 10, 11 getrennt. Der erste Teilstrom 10 besteht im Wesentlichen aus Körnern , Kurzstroh und Spreu und wird über einen Vorbereitungsboden 12 unmittelbar einer aus verschiedenen Siebebenen 13 bestehenden Reinigungseinrichtung 14 zugeführt. Die Reinigungseinrichtung 14 nimmt zudem eine Gebläseeinheit 15 auf, die einen die Siebebenen 13 durchsetzenden Luftstrom 16 generiert.

Der im rückwärtigen Bereich des Dreschwerks 7 aus diesem austretende weitere, im Wesentlichen aus Stroh und einem Restkomanteil bestehende Teilstrom 11 wird mittels einer Strohleittrommel 17 auf eine als Hordenschüttler 18 ausgeführte Trenneinrichtung 19 geleitet. Durch die noch näher zu beschreibende Bewegung des Hordenschüttlers 18 wird ein großer Anteil der in der Strohschicht enthaltenen Körner 21 auf dem Hordenschüttler 18 abgeschieden und über einen sogenannten Rücklaufboden 20 und den Vorbereitungsboden 12 an die Reinigungseinrichtung 14 übergeben.

In der Reinigungseinrichtung 14 wird schließlich aus den in sie eingeleiteten verschiedenen Gutströmen 10, 21 ein gereinigter Körnerstrom 22 mittels Förder elevatoren 23 in einen Korntank 24 gefördert und dort zwischengespeichert. Die Entleerung des Korntanks 24 erfolgt in der Regel mittels eines Korntankentleerförderers 25.

In an sich bekannter Weise wird der Hordenschüttler 18 von in Längsrichtung des Mähdreschers 1 weisenden nebeneinander angeordneten Schüttlerhorden 26 gebildet, die jeweils untenseitig in einem vorderen sowie einem nachgeordneten Bereich Lagerflansche 27 aufnehmen, die von in Lagerbuchsen 29 laufenden Kurbelwellen 28 durchsetzt werden. Nach dem Stand der Technik sind diese Kurbelwellen 28 endseitig in Flanschlagern 30 am schematisch dargestellten Maschinenrahmen 31 des Mähdreschers 1 gelagert, wobei der Antrieb der Kurbelwellen 28 im einfachsten Fall über einen Riementrieb 32 erfolgt. Dabei werden die im Maschinenrahmen 31 gelagerten Kurbelwellen 28 so in eine Drehbewegung versetzt, dass die von den Kurbelwellen 28 durchsetzten Lagerflansche 27 die Schüttlerhorden 26 mit einer definierten Drehzahl n1 auf Kreisbahnen 33 bewegen. Durch diese Drehbewegung der Schüttlerhorden 26 wird das von den Dreschorganen 7 an den Hordenschüttler 18 übergebene Erntegut 11 auf diesem in Form einer Aneinanderreihung von Wurfbewegungen gefördert und schließlich im rückwärtigen Bereich des Hordenschüttlers 18 aus dem Mähdrescher 1 herausgefördert.

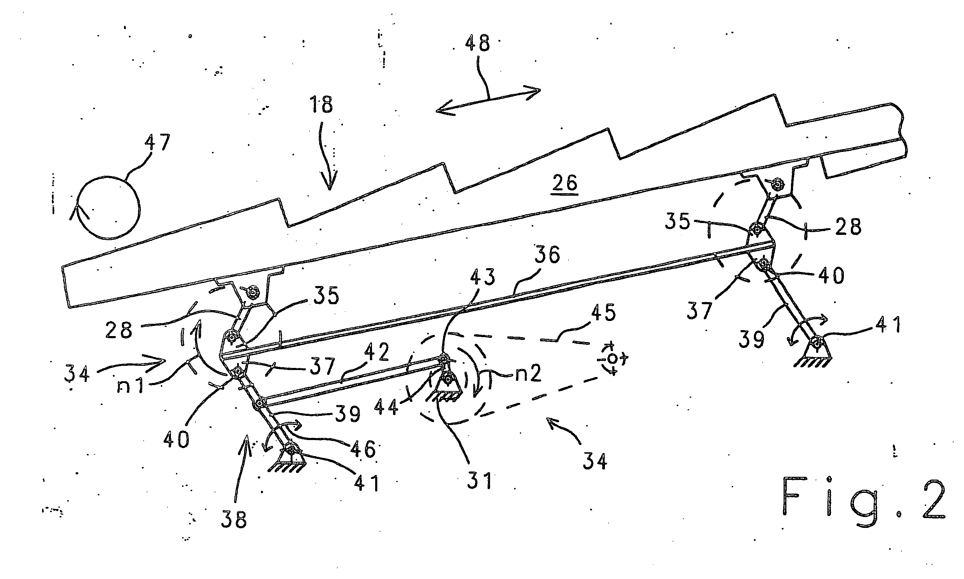

Fig. 2 zeigt den erfindungsgemäßen Hordenschüttlerantrieb 34 in einer schematischen Detailansicht. Die im frontseitigen und rückwärtigen Bereich der Schüttlerhorden 26 diesen untenseitig zugeordneten Kurbelwellen 28 sind nunmehr in Lagerflanschen 35 drehbar gelagert, wobei die Lagerflansche 35 in erfindungsgemäßer Weise von einem Zwischenrahmen 36 drehfest aufgenommen werden. Der Zwischenrahmen 36 ist so ausgeführt, dass er sich sowohl in Längs- als auch in Querrichtung der Schüttlerhorden 26 unterhalb des Hordenschüttlers 18 erstreckt und eine Vielzahl der beschriebenen Lagerflansche 35 aufnehmen kann. Der Zwischenrahmen 36 steht über weitere Lagerflansche 37 mit zumindest einem weiteren Kurbelantrieb 38 in Wirkverbindung. Der weitere Kurbelantrieb 38 wird von ersten und zweiten Kurbelschwingen 39 gebildet, die einenends um horizontale Achsen 40 schwenkbeweglich mit den weiteren Lagerflanschen 37 des Zwischenrahmens 36 verbunden sind. Anderenends werden die Kurbeischwingen 39 in Lagerstellen 41 schwenkbeweglich im Maschinenrahmen 31 des Mähdreschers 1 abgestützt. Im einfachsten Fall sind die Kurbeischwingen 39 jeweils paarweise quer zum Hordenschüttler 18 und zueinander beabstandet an dem Maschinenrahmen 31 des Mähdreschers 1 angeordnet. Es liegt im Rahmen der Erfindung, dass auch eine Vielzahl von Kurbelschwingen 39 zueinander benachbart und jeweils quer zum Hordenschüttler 18 diesem zugeordnet sein können, sodass eine Reduzierung der Belastung der einzelnen Kurbelschwinge 39 möglich wird. Im dargestellten Ausführungsbeispiel sind die im vorderen Bereich des Hordenschüttlers 18 angeordneten Kurbelschwingen 39 gelenkig mit wenigstens einer Koppel 42 verbunden, wobei die Koppel 42 anderenends um eine horizontale Achse 43 schwenkbeweglich an einer im Maschinenrahmen 31 des Mähdreschers 1 abgestützten Kurbel 44 angreift. Im einfachsten Fall kann die Kurbel 44 des weiteren Kurbelantriebs 38 wiederum mittels nicht näher dargestelltem Riementrieb 45 angetrieben werden. Der Riementrieb 45 versetzt die Kurbel 44 in Drehbewegung, wobei die Kurbel 44 mit der Drehzahl n2 umläuft. Dabei werden über die Koppel 42 zunächst die frontseitigen Kurbelschwingen 39 und über den Zwischenrahmen 36 die nachgeordneten Kurbelschwingen 39 gemäß der dargestellten Pfeilrichtung 46 in eine schwingende Bewegung versetzt. Diese schwingende Bewegung 46 des Zwischenrahmens 36 führt dazu, dass jeder Schüttierhorde 26 neben der von dem Hordenschüttlerantrieb 34 hervorgerufenen, umlaufenden Bewegung 47 eine Schwingbewegung 48 aufgeprägt wird, sodass nunmehr die Bewegung des Erntegutes 11 auf dem Hordenschüttler 18 sowohl von der umlaufenden Bewegung der Schüttlerhorden 26 als auch ihrer von dem angetriebenen Zwischenrahmen 36 hervorgerufenen Schwingbewegung 48 des Hordenschüttlers 18 beeinflusst wird.

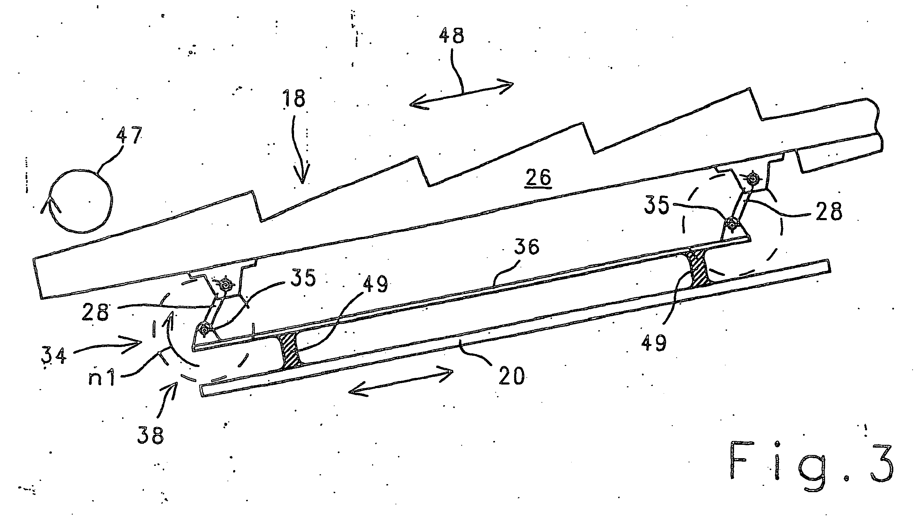

Eine besonders einfache Ausführung des den Zwischenrahmen 36 in Schwingung versetzenden Kurbelantriebs 38 wird gemäß Fig. 3 dann erreicht, wenn der Zwischenrahmen 36 über Verbindungsstege 49 starr mit dem sich unterhalb des Hordenschüttlers 18 erstreckenden Rücklaufboden 20 gekoppelt ist. Da der Rücklaufboden 20 in der Regel umlaufend angetrieben wird, könnte dadurch der Kurbelantrieb 38 für den erfindungsgemäßen Zwischenrahmen 36 unmittelbar von dem nicht dargestellten Antrieb des Rücklaufbodens 20 gebildet werden.

Mit einer Ausführung nach den Figuren 1 bis 3 wird ein Hordenschüttlerantrieb geschaffen, der es auf einfache Weise ermöglicht die Erregung 48 der Gutschicht 11 auf dem Hordenschüttler 18 zu beeinflussen, indem die Drehzahlen n1, n2 des Hordenschüttlerantriebs 34 und des weiteren Kurbelantriebs 38 gezielt in Abhängigkeit von einem oder mehreren Parametern der über den Hordenschüttler 18 geförderten Gutschicht 11 in noch näher zu beschreibender Weise veränderbar sind.

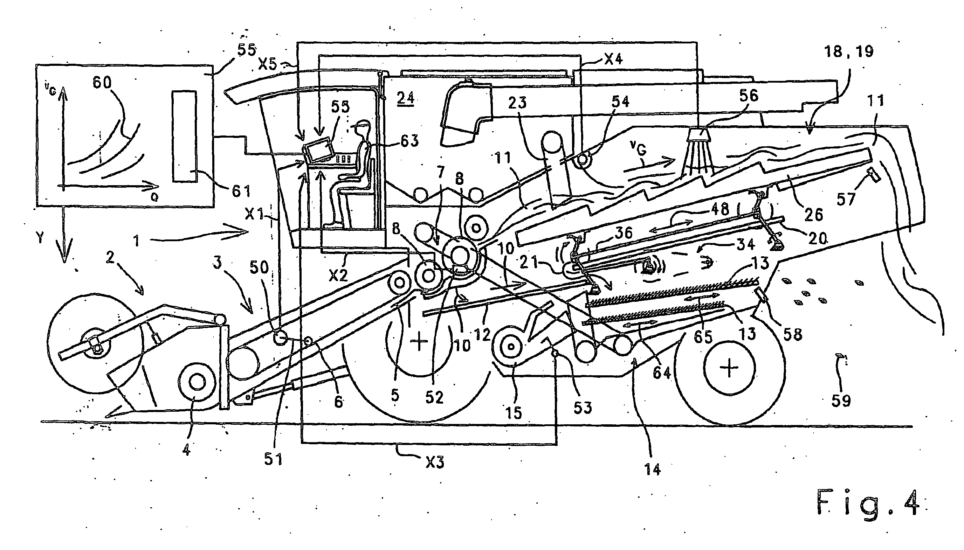

Gemäß Fig. 4 sind dem Mähdrescher 1 verschiedene sogenannte Durchsatzsensoren 50-54 zugeordnet, die in an sich bekannter Weise in Wechselwirkung mit einer Steuer- und Auswerteinheit 55 in der Lage sind, aus verschiedenen spezifischen Parametern des jeweils sensierten Gutstromes den Erntegutdurchsatz des jeweiligen Teilstromes oder den insgesamt den Mähdrescher 1 durchlaufenden Erntegutdurchsatz zu bestimmen. Im einfachsten Fall könnte der Schrägförderer 3 einen mit einem Potentiometer 50, gekoppelten Tastbügel 51 aufweisen, der die erntegutmengenabhängige Auslenkung des Förderers 6 bestimmt, wobei ein erntegutmengenproportionales Signal X1 an die Steuer- und Auswerteinheit 55 übergeben wird. Ferner ist es auch möglich, dass beispielsweise einer Dreschtrommel 8 ein an sich bekannter Drehmomentsensor 52 zugeordnet ist, der für den die Dreschorgane 7 durchlaufenden Erntegutstrom 5 ein erntegutmengenproportionales Signal X2 generiert, welches an die Steuer- und Auswerteinheit 55 übergeben wird. Aus dem Stand der Technik ist es auch bekannt beispielsweise Drucksensoren 53 im Bereich der Reinigungseinrichtung 14 einzusetzen, die erntegutmengenproportionale Drucksignale X3 an die Steuer- und Auswerteinheit 55 übermitteln. Unter Berücksichtigung verschiedener weiterer Parameter, wie etwa der Erntegutfeuchte, der Erntegutdichte, die unter anderem maßgeblich von der Struktur des Erntegutes bestimmt wird, und der Erntegutart sind derartig generierte erntegutmengenproportionale Signale X1-X3 in der Steuer- und Auswerteinheit 55 zu Emtegutdurchsätzen 5, 10, 11, 21 verrechenbar. Obgleich der in die Dreschorgane 7 integrierte Drehmomentsensor 52 schon recht gut zur Bestimmung der Menge des auf den Hordenschüttler 18 gelangenden Erntegutes 11 geeignet ist, wäre es aber auch denkbar, dem Hordenschüttler 18 selbst eine Tastbügel-Potentiometer-Kombination 54 zuzuordnen, die ein emtegutproportionales Signal X4 generiert und an die Steuer- und Auswerteinheit 55 übergibt. Insbesondere aus dem Signal X4 kann die Steuer- und Auswerteinheit 55 den auf den Hordenschüttler gelangten Erntegutdurchsatz 11 ermitteln. Zur Bestimmung der Gutgeschwindigkeit vG auf dem Hordenschüttler 18 kann diesem obenseitig beispielsweise ein Infrarotsensor 56 zur Bestimmung einer mittleren Geschwindigkeit des Erntegutes 11 zugeordnet sein, wobei das gutgeschwindigkeitsproportionale Signal X5 ebenfalls an die Steuer- und Auswerteinheit 55 übergeben wird.

Indem nun ein oder mehrere der vorgenannten Sensoren 50-54 erntegutmengenproportionale Signale X1-X4 und der Infrarotsensor 56 ein zur Geschwindigkeit der Gutschicht 11 auf dem Hordenschüttler 18 proportionales Signal X5 generieren, können in der Steuer- und Auswerteinheit 55 definierten Gutdurchsätzen 11 auf dem Hordenschüttler 18 definierte Gutgeschwindigkeiten vG zugeordnet werden. Zudem verfügt der Mähdrescher 1 in an sich bekannter Weise über sogenannte Körnersensoren 57, 58, die sowohl im rückwärtigen Bereich des Hordenschüttlers 18 als auch der Reinigungseinrichtung 14 angeordnet sind und die aus dem Mähdrescher 1 austretenden Verlustkörner 59 sensieren.

Aufgrund der bekannten Zusammenhänge von Gutdurchsatz, Geschwindigkeit vG der Gutschicht 11 auf dem Hordenschüttler 18, Erntegutart- und -eigenschaften sowie den Kornverlusten 59 sind in der Steuer- und Auswerteinheit 55 Kennlinien 60 hinterlegt, die definierten Erntegutdurchsätzen 11 auf dem Hordenschüttler 18 definierte Gutgeschwindigkeiten vG oder Gutgeschwindigkeitsintervalle zuordnen. Auf diese Weise wird es möglich, durchsatzabhängig optimierte Werte für die Gutgeschwindigkeit vG der Gutschicht 11 auf dem Hordenschüttler 98 zu ermitteln, wobei das maßgebende Optimierungskriterium niedrige Kornverluste 59 sind. Dies wird in Bezug auf den Hordenschüttler um so verständlicher, wenn man berücksichtigt, dass der mit hoher Geschwindigkeit aus den Dreschorganen 7 austretende Erntegutstrom 11 im Bereich des Hordenschüttlers 18 aufgrund der erheblichen Abnahme der Fördergeschwindigkeit eine deutliche Ausdehnung in vertikaler Richtung erfährt, die dazu führt, dass die in dem Gutstrom 11 befindlichen Restkörner einen erheblich längeren Weg bis zu ihrer Abscheidung an der Schüttierhorde 26 zurücklegen müssen. Zudem wirkt die bereits beschriebene, durch die stets gleiche Erregung der Gutschicht 11, mittels des umlaufenden Hordenschüttlerantriebs 34 hervorgerufene Verdichtung des Erntegutstromes 11, einer schnellen und effizienten Abscheidung der Körner aus der über den Hordenschüttler 18 geförderten Gutschicht 11 entgegen.

In erfindungsgemäßer Weise kann durch die Ermittlung des über den Hordenschüttler 18 geförderten Erntegutdurchsatzes 11 und unter Hinzuziehung der in der Steuer- und Auswerteinheit 55 hinterlegten Kennlinien 60 eine optimierte Gutgeschwindigkeit vG auf dem Hordenschüttler 18 ermittelt werden. Diese optimierte Fördergeschwindigkeit vG kann im einfachsten Fall dadurch erreicht werden, dass die Steuer- und Auswerteinheit 55 über einen Regelalgorithmus 61 verfügt, der die Anpassung der tatsächlichen Gutgeschwindigkeit vG an die ermittelte optimierte Gutgeschwindigkeit vG dadurch erreicht, dass in der Steuer- und Auswerteinheit 55 Ausgangssignale Y generiert werden, die eine Änderung einer oder mehrere Betriebsparameter 62 des Hordenschüttlers 18 bewirken. Indem deren Änderung durch die Steuer- und Auswerteinrichtung 55 selbsttätig vorgenommen wird, wird ein Regelsystem geschaffen, dass sehr effizient auf Durchsatz- und Kornverluständerungen reagieren kann, ohne dass der Betreiber 63 des Mähdreschers 1 unmittelbar in diesen Prozess eingebunden ist. Eine Änderung der Gutgeschwindigkeit vG durch Einflussnahme auf die Betriebsparameter 62 des Hordenschüttlers 18 kann im einfachsten Fall durch Änderung der Drehzahl n1 des Hordenschüttlerantriebs 34 und/oder durch Änderung der Drehzahl n2 des weiteren, den Zwischenrahmen 36 bewegenden Kurbelantriebs 38 vorgenommen werden, wobei die Drehzahl n2 maßgeblich die Schwingbewegung 48 des Hordenschüttlers 18 beeinflusst. Es liegt im Rahmen der Erfindung, dass die Steuer- und Auswerteinheit 55 in der Weise arbeitet, dass an Hand der hinterlegten Kennlinien 60 zunächst optimierte Gutgeschwindigkeiten vG ermittelt werden und sodann aus diesen optimierten Gutgeschwindigkeiten vG der Umfang der Änderung eines oder mehrerer Betriebsparameter 62 ermittelt und an dem jeweiligen Organ 34, 38 eingestellt wird. Zugleich wird die sich einstellende Gutgeschwindigkeit vG auf dem Hordenschüttler 18 mittels des Infrarotsensors 56 registriert und gegebenenfalls wird der Optimierungsvorgang solange wiederholt, bis die sich einstellende Gutgeschwindigkeit vG auf dem Hordenschüttler 18 der in der Steuer- und Auswerteinheit 55 ermittelten Gutgeschwindigkeit vG entspricht. Damit die Regelung in akzeptablen Grenzen arbeitet, können für die Gutgeschwindigkeit vG und den Gutdurchsatz Bereiche angegeben werden, innerhalb derer eine Änderung der eingestellten Betriebsparameter 62 nicht vorgenommen wird. Es ist auch denkbar, dass die ermittelten optimierten Betriebsparameter 62 dem Betreiber 63 visuell angezeigt werden, sodass dieser über die selbsttätige Änderung der Betriebsparameter 62 informiert ist oder die Änderung der Betriebsparameter 62 selbst vornehmen kann, wobei letzteres eher die Ausnahme sein wird.

Um einen möglichst großen Auflockerungseffekt zu erzielen, können der Hordenschüttlerantrieb 34 und der Kurbelantrieb 38 des Zwischenrahmens 36 so aufeinander abgestimmt sein, dass ihre Antriebsglieder 28, 44 (Fig. 2) synchron oder asynchron umlaufen. Zudem sind die Kurbelschwingen 39 so in ihren Lagerstellen 41 am Maschinenrahmen 31 des Mähdreschers 1 fixiert, dass sie in ihrer Neigung unabhängig voneinander verstellbar sind. Dies führt zu einer weiteren Flexibilisierung der Schwingbewegung 48 des Hordenschüttlers 18. Mit gleicher Zielrichtung kann ferner durch nicht näher dargestellte Übersetzungsstufen dafür gesorgt werden, dass das Drehzahlverhältnis zwischen der Drehzahl n1 des Hordenschüttlerantriebs 34 und der Drehzahl n2 des dem Zwischenrahmen 36 zugeordneten Kurbelantriebs 38 konstant gehalten wird oder änderbar ist.

Aufgrund dessen, dass das über den Hordenschüttler 18 geförderte Erntegut 11 sehr unterschiedlich strukturiert ist und im Wesentlichen aus langhalmigem Stroh sowie Kurzstroh und Spreu besteht, können sich innerhalb der Gutschicht auf dem Hordenschüttler unterschiedliche Schwingungszustände und Bewegungsabläufe einzelner Gutmatten ergeben. Gemäß der Erfindung kann die in der Steuer- und Auswerteinheit 55 in Abhängigkeit von den verschiedensten Parametern des Erntegutes 11 ermittelte Erregung der Gutschicht so ausgestaltet sein, dass die Erregung an die sich einstellende Eigenschwingfrequenz der Gutschicht auf dem Hordenschüttler anpassbar ist. Im einfachsten Fall wird die beschriebene Änderung der Erregung der Gutschicht durch Einflussnahme auf die Betriebsparameter des Hordenschüttlers 18 bewirkt, wobei diese Betriebsparameter erfindungsgemäß von der Drehzahl n1 des Hordenschüttlerantriebs 34, der Drehzahl n2 des weiteren Kurbelantriebs 38 und/oder der Amplitute der Gutschichterregung gebildet werden.

Zudem kann das erfindungemäße Verfahren so ausgeführt sein, dass dem Mähdrescher in an sich bekannter und deshalb nicht näher dargestellter Weise Neigungssensoren zugeordnet sind, deren der Maschinenneigung proportionalen Signale ebenfalls bei der Ermittlung der optimalen Gutschichterregung berücksichtigt werden. Dies hat insbesondere den Vorteil, dass ein hangneigungsabhängiger, die Kornabscheidung negativ beeinflussender Quertransport der Gutschicht 11 auf dem Hordenschüttler 18 vermieden werden kann.

In vorteilhafter Weiterbildung können der beschriebene Hordenschüttlerantrieb 34 und der diesem zugeordnete weitere Kurbelantrieb 38 so gestaltet sein, dass jeder Schüttlerhorde 26 oder einer bestimmten Anzahl von Schüttlerhorden 26 derartige Antriebe 34, 38 zugeordnet sind, sodass eine weitere Flexibilisierung der Erregung der Gutschicht 11 auf dem Hordenschüttler 18 erreicht wird.

Es liegt im Rahmen des Könnens eines Fachmanns das beschriebene Ausführungsbeispiel in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Mähdrescher
- 2: Getreideschneidwerk
- 3: Schrägförderer
- 4: Querförderorgan
- 5: Erntegut
- 6: Förderer
- 7: Dreschorgane
- 8: Dreschtrommel
- 9: Dreschkorb
- 10: Teilstrom
- 11: Teilstrom
- 12: Vorbereitungsboden
- 13: Siebebenen
- 14: Reinigungseinrichtung
- 15: Gebläseeinheit
- 16: Luftstrom
- 17: Strohleittrommel
- 18: Hordenschüttler
- 19: Trenneinrichtung
- 20: Rücklaufboden
- 21: Körner-Beimengungsstrom
- 22: Körnerstrom
- 23: Förderelevator
- 24: Korntank
- 25: Korntankentleerförderer
- 26: Schüttlerhorde
- 27: Lagerflansch
- 28: Kurbelwelle
- 29: Lagerbuchse
- 30: Flanschlager
- 31: Maschinenrahmen
- 32: Riemerttrieb
- 33: Kreisbahn
- 34: Hordenschüttlerantrieb
- 35: Lagerflansch
- 36: Zwischenrahmen
- 37: Lagerflansch
- 38: Kurbelantrieb
- 39: Kurbelschwinge
- 40: horizontale Achse
- 41: Lagerstelle
- 42: Koppel
- 43: horizontale Achse
- 44: Kurbel
- 45: Riementrieb
- 46: Pfeilrichtung
- 47: umlaufende Bewegung
- 48: Schwingbewegung
- 49: Verbindungssteg
- 50: Potentiometer
- 51: Tastbügel
- 52: Drehmomentsensor
- 53: Drucksensor
- 54: Tastbügel-Potentiometer-Kombination
- 55: Steuer- und Auswerteinheit
- 56: Infrarotsensor
- 57: Körnersensor
- 58: Kömersensor
- 59: Verlustkörner
- 60: Kennlinie
- 61: Regelalgorithmus
- 62: Betriebsparameter
- 63: Betreiber
- 64: Schwingbewegung
- 65: Schwingungsrichtungswinkel

- n1: Kurbelwellendrehzahl
- n2: Kurbeldrehzahl
- X1.4: erntegutmengenproportionale Signale
- X5: Gutgeschwindigkeitssignal
- vG: Gutgeschwindigkeit

## Patentansprüche

1. Verfahren zum Betreiben eines Mähdreschers, dessen Maschinenrahmen Arbeitsorgane zur Bearbeitung des geernteten Gutstromes aufnimmt und wobei den als Dreschwerk ausgeführten Arbeitsorganen zumindest eine, mittels Hordenschüttlerantrieb erregte Korn-Stroh-Trenneinrichtung nachgeordnet ist,
**dadurch gekennzeichnet,**
**dass** die Erregung der Gutschicht (11) auf dem Hordenschüttler (18, 19) in Abhängigkeit eines oder mehrerer Parameter des Erntegutes (11) in der Weise änderbar ist, dass der zumindest Kurbelwellen (28) und deren Lagerflansche (35) umfassende Hordenschüttlerantrieb (34) von einem Zwischenrahmen (36) aufgenommen wird und dieser Zwischenrahmen (36) relativ zum Maschinenrahmen (31) des Mähdreschers (1) bewegbar ist.

2. Verfahren zum Betreiben eines Mähdreschers nach Anspruch 1,
**dadurch gekennzeichnet,**
**dass** die Parameter des Erntegutes (11) die Erntegutart, der Erntegutdurchsatz, die Erntegutfeuchte, die Erntegutgeschwindigkeit (vG) und/oder die Struktur des Erntegutes (11) sein können.

3. Verfahren zum Betreiben eines Mähdreschers nach einem der vorhergehenden Ansprüche,
**dadurch gekennzeichnet,**
**dass** die Erregung der Gutschicht (11) an die Eigenfrequenz des zu erregenden Erntegutes (11) anpassbar ist.

4. Verfahren zum Betreiben eines Mähdreschers nach einem der vorhergehenden Ansprüche,
**dadurch gekennzeichnet,**
**dass** die Erregung der Gutschicht (11) auf dem Hordenschüttler (18, 19) in Abhängigkeit vom Abscheideverlauf auf dem Hordenschüttler (18, 19) änderbar ist.

5. Verfahren zum Betreiben eines Mähdreschers nach einem der vorhergehenden Ansprüche,
**dadurch gekennzeichnet,**
**dass** der Parameter des Erntegutes (11) die Fördergeschwindigkeit (vG) ist und die Fördergeschwindigkeit (vG) des Erntegutes (11) auf dem wenigstens einen Hordenschüttler (18, 19) in Abhängigkeit vom Erntegutdurchsatz (11) einstellbar ist.

6. Verfahren zum Betreiben eines Mähdreschers nach einem der vorhergehenden Ansprüche,
**dadurch gekennzeichnet,**
**dass** der Erntegutdurchsatz von dem Erntegutdurchsatz (11) auf dem Hordenschüttler (17, 18) und/oder von einem den Mähdrescher (1) durchlaufenden, dem Erntegutdurchsatz (11) auf dem Hordenschüttler (18, 19) annähernd proportionalen Erntegutdurchsatz (5, 10, 21) gebildet wird.

7. Verfahren zum Betreiben eines Mähdreschers nach einem der vorhergehenden Ansprüche,
**dadurch gekennzeichnet,**
**dass** die Änderung der Fördergeschwindigkeit (vG) des Erntegutes (11) durch Änderung eines oder mehrerer Betriebsparameter (n1, n2, 28, 48) des wenigstens einen Hordenschüttlers (18, 19) erreicht wird.

8. Verfahren zum Betreiben eines Mähdreschers nach Anspruch 7,
**dadurch gekennzeichnet,**
**dass** der oder die Betriebsparameter (n1, n2, 28, 48) die Hordenschüttlerdrehzahl (n1), die Amplitude der Gutschichterregung und/oder die Schwingungbewegung (n2, 48) des Hordenschüttlers (18, 19) sind.

9. Verfahren zum Betreiben eines Mähdreschers nach einem der vorhergehenden Ansprüche,
**dadurch gekennzeichnet,**
**dass** Sensoren (50-54) zur Erfassung des Gutdurchsatzes (5, 10, 11, 21) auf dem Hordenschüttler (18, 19) und/oder an beliebiger Position innerhalb des Mähdreschers (1) sowie Sensoren (56) zur Erfassung der Gutgeschwindigkeit (vG) auf dem Hordenschüttler (18, 19) vorgesehen sind, deren durchsatz- und geschwindigkeitsproportionalen Signale (X1-X5) in einer Steuer- und Auswerteinheit (55) zu Istwerten des Erntegutdurchsatzes und der Erntegutgeschwindigkeit (vG) auf dem Hordenschüttler (18, 19) verrechnet werden.

10. Verfahren zum Betreiben eines Mähdreschers nach einem der vorhergehenden Ansprüche,
**dadurch gekennzeichnet,**
**dass** in der Steuer- und Auswerteinheit (55) emtegutart- und erntegutdurchsatzabhängige Gutgeschwindigkeits-Kennlinien (60) hinterlegt sind, aus denen für die ermittelten Emtegutdurchsätze optimale Gutgeschwindigkeiten (vG) auf dem Hordenschüttler (18, 19) ermittelt werden.

11. Verfahren zum Betreiben eines Mähdreschers nach Anspruch 10,
**dadurch gekennzeichnet,**
**dass** zumindest ein Optimierungskriterium niedrige Kornverluste sind.

12. Verfahren zum Betreiben eines Mähdreschers nach einem der vorhergehenden Ansprüche,
**dadurch gekennzeichnet,**
**dass** in der Steuer- und Auswerteinheit (55) aus den optimierten Geschwindigkeiten (vG) des Erntegutes (11) ein oder mehrere optimierte Betriebsparameter (n1, n2, 28, 48) des Hordenschüttlers (18, 19) ermittelt werden.

13. Verfahren zum Betreiben eines Mähdreschers nach einem der vorhergehenden Ansprüche,
**dadurch gekennzeichnet,**
**dass** die ermittelten optimierten Betriebsparameter (n1, n2, 28, 48) des Hordenschüttlers (18, 19) dem Betreiber (63) visuell zur Anzeige gebracht werden und/oder selbsttätig an dem wenigstens einen Hordenschüttler (18, 19) eingestellt werden.

14. Verfahren zum Betreiben eines Mähdreschers nach einem der vorhergehenden Ansprüche,
**dadurch gekennzeichnet,**
**dass** die Erregung der Gutschicht (11) auf dem Hordenschüttler (18, 19) die Hangneigung des Mähdreschers (1) berücksichtigt.

15. Vorrichtung zum Betreiben eines Mähdreschers, dessen Maschinenrahmen Arbeitsorgane zur Bearbeitung des geernteten Gutstromes aufnimmt und wobei den als Dreschwerk ausgeführten Arbeitsorganen zumindest eine, mittels Hordenschüttlerantrieb erregte Korn-Stroh-Trenneinrichtung nachgeordnet ist,
**dadurch gekennzeichnet,**
**dass** der zumindest Kurbelwellen (28) und deren Lagerflansche (35) umfassende Hordenschüttlerantrieb (34) von einem Zwischenrahmen (36) aufgenommen wird und dieser Zwischenrahmen (36) relativ zum Maschinenrahmen (31) des Mähdreschers (1) bewegbar ist.

16. Vorrichtung zum Betreiben eines Mähdreschers nach Anspruch 15,
**dadurch gekennzeichnet,**
**dass** die Relativbewegung des Zwischenrahmens (36) zum Maschinenrahmen (31) durch einen Kurbelantrieb (38) bewirkt wird.

17. Vorrichtung zum Betreiben eines Mähdreschers nach einem der Ansprüche 15 oder 16,
**dadurch gekennzeichnet,**
**dass** der Kurbelantrieb (38) den Zwischenrahmen (36) in eine schwingende Bewegung versetzt.

18. Vorrichtung zum Betreiben eines Mähdreschers nach einem der Ansprüche 15 bis 17,
**dadurch gekennzeichnet,**
**dass** der Hordenschüttlerantrieb (34) und der weitere Kurbelantrieb (38) synchron oder asynchron umlaufen.

19. Vorrichtung zum Betreiben eines Mähdreschers nach einem der Ansprüche 15 bis 18,
**dadurch gekennzeichnet,**
**dass** dem Hordenschüttler (18, 19) untenseitig in an sich bekannter Weise ein angetriebener Rücklaufboden (20) zugeordnet ist und der Zwischenrahmen (36) drehfest mit dem Rücklaufboden (20) verbunden ist.

20. Vorrichtung zum Betreiben eines Mähdreschers nach einem der Ansprüche 15 bis 19,
**dadurch gekennzeichnet,**
**dass** die Kröpfung der Kurbelwellen (28) des Hordenschüttlerantriebs (34) des wenigstens einen Hordenschüttlers (18, 19), die von dem weiteren Kurbelantrieb (38) bewirkte Bewegung des Zwischenrahmens (36) und die Erregerfrequenzen (n1, n2) des Hordenschüttlerantriebs (34) und des weiteren Kurbelantriebs (38) aufeinander abgestimmt sind.

21. Vorrichtung zum Betreiben eines Mähdreschers nach einem der Ansprüche 15 bis 20,
**dadurch gekennzeichnet,**
**dass** der Hordenschüttler (18, 19) an sich bekannte Schüttlerhorden (26) aufweist, die über Kurbelwellen (28) in eine umlaufende Bewegung (47) versetzt werden und wobei jede Schüttlerhorde (26) von einem separaten Hordenschüttlerantrieb 34) und einem diesen zugeordneten weiteren Kurbelantrieb (38) erregt wird.

22. Vorrichtung zum Betreiben eines Mähdreschers nach einem der Ansprüche 15 bis 21,
**dadurch gekennzeichnet,**
**dass** der Schwingungsrichtungswinkel (48) und/oder das Drehzahlverhältnis (n1, n2) zwischen Hordenschüttlerantrieb (34) und dem weiteren Kurbelantrieb (38) verstellbar ist.

## Claims

1. A method of operating a combine harvester whose machine frame receives working members for processing the flow of harvested crop material and wherein arranged downstream of the working members which are in the form of a threshing mechanism is at least one grain-straw separation device agitated by means of a straw walker drive,
**characterised in that**
the agitation of the layer of material (11) on the straw walker (18, 19) is variable in dependence on one or more parameters of the crop material (11) in such a way that the straw walker drive (34) including at least crankshafts (28) and the mounting flanges (35) thereof is carried by an intermediate frame (36) and the intermediate frame (36) is movable relative to the machine frame (31) of the combine harvester (1).

2. A method of operating a combine harvester according to claim 1 **characterised in that** the parameters of the crop material (11) can be the kind of crop material, the crop material throughput, the crop material moisture content, the crop material speed (vG) and/or the structure of the crop material (11).

3. A method of operating a combine harvester according to one of the preceding claims **characterised in that** the agitation of the layer of material (11) can be adapted to the natural frequency of the crop material (11) to be agitated.

4. A method of operating a combine harvester according to one of the preceding claims **characterised in that** the agitation of the layer of material (11) on the straw walker (18, 19) is variable in dependence on the separation procedure on the straw walker (18, 19).

5. A method of operating a combine harvester according to one of the preceding claims **characterised in that** the parameter of the crop material (11) is the conveyor speed (vG) and the conveyor speed (vG) of the crop material (11) on the at least one straw walker (18) is adjustable in dependence on the crop material throughput (11).

6. A method of operating a combine harvester according to one of the preceding claims **characterised in that** the crop material throughput is formed by the crop material throughput (11) on the straw walker (17, 18) and/or by a crop material throughput (5, 10, 21) which passes through the combine harvester (1) and which is approximately proportional to the crop material throughput (11) on the straw walker (18, 19).

7. A method of operating a combine harvester according to one of the preceding claims **characterised in that** the change in the conveyor speed (vG) of the crop material (11) is achieved by changing one or more operating parameters (n1, n2, 28, 48) of the at least one straw walker (18, 19).

8. A method of operating a combine harvester according to one of the preceding claims **characterised in that** the operating parameter or parameters (n1, n2, 28, 48) are the straw walker rotary speed (n1), the amplitude of the agitation of the layer of material and/or the oscillation movement (n2, 48) of the straw walker (18, 19).

9. A method of operating a combine harvester according to one of the preceding claims **characterised in that** there are provided sensors (50-54) for detecting the material throughput (5, 10, 11, 21) on the straw walker (18, 19) and/or at any position within the combine harvester (1) and sensors (56) for detecting the material speed (vG) on the straw walker (18, 19), whose throughput-proportional and speed-proportional signals (X1-X5) are calculated in a control and evaluation unit (55) to afford actual values for the crop material throughput and the crop material speed (vG) on the straw walker (18, 19).

10. A method of operating a combine harvester according to one of the preceding claims **characterised in that** material speed characteristic curves (60) which are dependent on the kind of crop material and the crop material throughput are stored in the control and evaluation unit (55), wherein optimum material speeds (vG) on the straw walker (18, 19) are ascertained from said characteristic curves for the ascertained crop material throughputs.

11. A method of operating a combine harvester according to claim 10 **characterised in that** at least one optimisation criterion is low grain losses.

12. A method of operating a combine harvester according to one of the preceding claims **characterised in that** one or more optimised operating parameters (n1, n2, 28, 48) of the straw walker (18, 19) are ascertained in the control and evaluation unit (55) from the optimised speeds (vG) of the crop material (11).

13. A method of operating a combine harvester according to one of the preceding claims **characterised in that** the ascertained optimised operating parameters (n1, n2, 28, 48) of the straw walker (18, 19) are displayed visually to the operator (63) and/or are set automatically at the at least one straw walker (18, 19).

14. A method of operating a combine harvester according to one of the preceding claims **characterised in that** the agitation of the layer of material (11) on the straw walker (18, 19) takes account of the slope inclination of the combine harvester (1).

15. Apparatus for operating a combine harvester whose machine frame receives working members for processing the flow of harvested crop material and wherein arranged downstream of the working members which are in the form of a threshing mechanism is at least one grain-straw separation device agitated by means of a straw walker drive,
**characterised in that**
the straw walker drive (34) including at least crankshafts (28) and the mounting flanges (35) thereof is carried by an intermediate frame (36) and the intermediate frame (36) is movable relative to the machine frame (31) of the combine harvester (1).

16. Apparatus for operating a combine harvester according to claim 15 **characterised in that** the relative movement of the intermediate frame (36) relative to the machine frame (31) is produced by a crank drive (38).

17. Apparatus for operating a combine harvester according to one of claims 15 to 17 **characterised in that** the crank drive (38) causes the intermediate frame (36) to perform an oscillating movement.

18. Apparatus for operating a combine harvester according to one of claims 15 to 17 **characterised in that** the straw walker drive (34) and the further crank drive (38) rotate synchronously or asynchronously.

19. Apparatus for operating a combine harvester according to one of claims 15 to 18 **characterised in that** a driven return floor (20) is associated with the straw walker (18, 19) at the underside in per se known manner and the intermediate frame (35) is non-rotatably connected to the return floor (20).

20. Apparatus for operating a combine harvester according to one of claims 15 to 19 **characterised in that** the crank offset of the crankshafts (28) of the straw walker drive (34) of the at least one straw walker (18), the movement of the intermediate frame (36) produced by the further crank drive (38) and the agitation frequencies (n1, n2) of the straw walker drive (34) and the further crank drive (38) are matched to each other.

21. Apparatus for operating a combine harvester according to one of claims 15 to 20 **characterised in that** the straw walker (18, 19) has per se known walker members (26) which are displaced with a rotating movement (47) by way of crankshafts (28) and wherein each walker member (26) is agitated by a separate straw walker drive (34) and a further crank drive (38) associated therewith.

22. Apparatus for operating a combine harvester according to one of claims 15 to 22 **characterised in that** the angle of oscillation direction (48) and/or the rotary speed ratio (n1, n2) between the straw walker drive (4) and the further crank drive (38) is adjustable.

## Revendications

1. Procédé d'utilisation d'une moissonneuse-batteuse, dont le châssis reçoit des organes de travail pour le traitement du flux de produit récolté et dans laquelle au moins un dispositif de séparation grain/paille excité au moyen d'un mécanisme d'entraînement de secoueur est placé en aval des organes de travail conformés en batteur, **caractérisé par le fait que** l'excitation de la couche de produit (11) sur le secoueur (18, 19) peut être modifiée en fonction d'un ou de plusieurs paramètres du produit de récolte (11), le mécanisme d'entraînement de secoueur (34) qui comprend au moins des vilebrequins (28) et des brides (35) associées étant supporté par un châssis intermédiaire (36) et le châssis intermédiaire (36) étant mobile par rapport au châssis de machine (31).

2. Procédé d'utilisation d'une moissonneuse-batteuse selon la revendication 1, **caractérisé par le fait que** les paramètres du produit de récolte (11) peuvent être la nature du produit de récolte, le débit de produit de récolte, l'humidité du produit de récolte, la vitesse du produit de récolte (vG) et/ou la structure du produit de récolte (11).

3. Procédé d'utilisation d'une moissonneuse-batteuse selon une des revendications précédentes, **caractérisé par le fait que** l'excitation de la couche de produit (11) peut être adaptée à la fréquence propre du produit de récolte (11) à exciter.

4. Procédé d'utilisation d'une moissonneuse-batteuse selon une des revendications précédentes, **caractérisé par le fait que** l'excitation de la couche de produit (11) sur le secoueur (18, 19) peut être modifiée en fonction du déroulement de la séparation sur ledit secoueur (18, 19).

5. Procédé d'utilisation d'une moissonneuse-batteuse selon une des revendications précédentes, **caractérisé par le fait que** le paramètre du produit de récolte (11) est la vitesse de transport (vG) du produit de récolte (11) et que la vitesse de transport (vG) du produit de récolte (11) sur le secoueur (18, 19), au nombre d'au moins un, peut être réglée en fonction du débit de produit de récolte (11).

6. Procédé d'utilisation d'une moissonneuse-batteuse selon une des revendications précédentes, **caractérisé par le fait que** le débit de produit de récolte (11) est formé par le débit de produit de récolte (11) sur le secoueur (18, 19) et/ou un débit de produit de récolte (11) sensiblement proportionnel au débit de produit de récolte (11) sur le secoueur (18, 19) qui traverse la moissonneuse-batteuse (1).

7. Procédé d'utilisation d'une moissonneuse-batteuse selon une des revendications précédentes, **caractérisé par le fait que** la variation de la vitesse de transport (vG) du produit de récolte (11) est obtenue par modification d'un ou de plusieurs paramètres de fonctionnement (n1, n2, 28, 48) du secoueur (18, 19) au nombre d'au moins un.

8. Procédé d'utilisation d'une moissonneuse-batteuse selon une des revendications précédentes, **caractérisé par le fait que** le ou les paramètre(s) de fonctionnement (n1, n2, 28, 48) est (sont) la vitesse de rotation (n1) du secoueur, l'amplitude de l'excitation de la couche de produit et/ou le mouvement d'oscillation (n2, 48) du secoueur (18, 19).

9. Procédé d'utilisation d'une moissonneuse-batteuse selon une des revendications précédentes, **caractérisé par le fait qu'**il est prévu des capteurs (50-54) pour mesurer le débit de produit (5, 10, 11, 21) sur le secoueur (18, 19) et/ou en un point quelconque à l'intérieur de la moissonneuse-batteuse (1), ainsi que des capteurs (56) pour mesurer la vitesse (vG) du produit sur le secoueur (18, 19), dont les signaux (X1-X5) proportionnels au débit et à la vitesse sont convertis dans une unité de contrôle et de traitement (55) en valeurs réelles de débit de produit de récolte et de vitesse de produit de récolte (vG) sur le secoueur (18, 19).

10. Procédé d'utilisation d'une moissonneuse-batteuse selon une des revendications précédentes, **caractérisé par le fait que** dans l'unité de contrôle et de traitement (55) sont mémorisées des courbes caractéristiques de vitesse de produit en fonction de la nature du produit de récolte et du débit de produit de récolte, à partir desquelles des vitesses de produit (vG) optimales sur le secoueur (18, 19) sont déterminées pour les débits de produit de récolte (18 ,19) mesurés.

11. Procédé d'utilisation d'une moissonneuse-batteuse selon la revendication 10, **caractérisé par le fait qu'**au moins un critère d'optimisation est une faible perte en grain.

12. Procédé d'utilisation d'une moissonneuse-batteuse selon une des revendications précédentes, **caractérisé par le fait que** dans l'unité de contrôle et de traitement (55) on détermine à partir des vitesses (vG) optimisées du produit de récolte (11) un ou plusieurs paramètres de fonctionnement (n1, n2, 28, 48) optimisés du secoueur (18, 19).

13. Procédé d'utilisation d'une moissonneuse-batteuse selon une des revendications précédentes, **caractérisé par le fait que** les paramètres de fonctionnement (n1, n2, 28, 48) optimisés du secoueur (18, 19) sont affichés visuellement à l'attention de l'utilisateur (63) et/ou réglés de manière automatique sur le secoueur (18, 19) au nombre d'au moins un.

14. Procédé d'utilisation d'une moissonneuse-batteuse selon une des revendications précédentes, **caractérisé par le fait que** l'excitation de la couche de produit (11) sur le secoueur (18, 19) prend en compte l'inclinaison de la moissonneuse-batteuse (1) due à la pente.

15. Dispositif pour l'utilisation d'une moissonneuse-batteuse dont le châssis reçoit des organes de travail pour le traitement du flux de produit récolté et dans laquelle au moins un dispositif de séparation grain/paille excité au moyen d'un mécanisme d'entraînement de secoueur est placé en aval des organes de travail conformés en batteur, **caractérisé par le fait que** le secoueur (18, 19) qui comprend au moins des vilebrequins (28) et des brides (35) associées est supporté par un châssis intermédiaire (36) et que ledit châssis intermédiaire (36) est mobile par rapport au châssis (31) de la moissonneuse-batteuse (1).

16. Dispositif pour l'utilisation d'une moissonneuse-batteuse selon la revendication 15, **caractérisé par le fait que** le déplacement relatif mécanisme du châssis intermédiaire (36) par rapport au châssis de machine (31) est obtenu à l'aide d'un mécanisme à bielle (38).

17. Dispositif pour l'utilisation d'une moissonneuse-batteuse selon une des revendications 15 ou 16, **caractérisé par le fait que** le mécanisme à bielle (38) impose un mouvement oscillant au châssis intermédiaire (36).

18. Dispositif pour l'utilisation d'une moissonneuse-batteuse selon une des revendications 15 à 17, **caractérisé par le fait que** le mécanisme d'entraînement de secoueur (34) et le mécanisme à bielle (38) fonctionnent de manière synchrone ou asynchrone.

19. Dispositif pour l'utilisation d'une moissonneuse-batteuse selon une des revendications 15 à 18, **caractérisé par le fait qu'**une plaque de retour (20) entraînée est associée de manière connue en soi au secoueur (18, 19), sous celui-ci, et que le châssis intermédiaire (35) est solidaire en rotation de la plaque de retour (20).

20. Dispositif pour l'utilisation d'une moissonneuse-batteuse selon une des revendications 15 à 19 **caractérisé par le fait que** le coude de vilebrequin (28) du mécanisme d'entraînement de secoueur (34) du secoueur (18, 19) au nombre d'au moins un, le déplacement du châssis intermédiaire (36) provoqué par le mécanisme à bielle (38) supplémentaire et les fréquences d'excitation (n1, n2) du mécanisme d'entraînement de secoueur (34) et du mécanisme à bielle (38) sont mutuellement adaptés.

21. Dispositif pour l'utilisation d'une moissonneuse-batteuse selon une des revendications 15 à 20, **caractérisé par le fait que** le secoueur (18, 19) comporte des grilles de secoueur (26) connues, qui sont mises en mouvement (47) par l'intermédiaire de vilebrequins (28), chaque grille de secoueur (26) étant excitée par un mécanisme d'entraînement de secoueur (34) séparé et un mécanisme à bielle (38) associé à celui-ci.

22. Dispositif pour l'utilisation d'une moissonneuse-batteuse selon une des revendications 15 à 21, **caractérisé par le fait que** l'angle (48) de la direction d'oscillation et/ou le rapport de vitesses (n1, n2) entre le mécanisme d'entraînement de secoueur (34) et le mécanisme à bielle (38) sont réglables.
